# EUROPÄISCHE PATENTSCHRIFT

(11) **EP 3 205 194 B1**
(45) Veröffentlichungstag und Bekanntmachung des Hinweises auf die Patenterteilung: **29.09.2021**
(21) Anmeldenummer: 17154188.1
(22) Anmeldetag: 01.02.2017
(51) Int. Cl.: A01B 73/02, A01B 73/04

(54) **LANDWIRTSCHAFTLICHES GERÄT MIT KLAPPBAREM MASCHINENRAHMEN**
AGRICULTURAL IMPLEMENT WITH FOLDABLE MACHINE FRAME
APPAREIL AGRICOLE COMPRENANT UN CHÂSSIS DE MACHINE REPLIABLE

(30) Priorität: 02.02.2016 DE 202016000649 U
(43) Veröffentlichungstag der Anmeldung: 16.08.2017
(73) Patentinhaber: PÖTTINGER Landtechnik GmbH, 4710 Grieskirchen (AT)
(72) Erfinder: Preimeß, Hans-Jörg, 9811 Lendorf (AT)
(74) Vertreter: Thoma, Michael

(56) Entgegenhaltungen:
- DE-A1- 19 817 608
- US-A- 3 941 194
- US-A- 4 128 131
- US-A1- 2012 247 378

## Beschreibung

Die vorliegende Erfindung betrifft ein landwirtschaftliches Gerät, insbesondere in Form eines an einen Schlepper anbaubaren Anbaugeräts, mit einem Maschinenrahmen, der zumindest zwei zueinander abklappbare Rahmenteile umfasst, wobei eine Druckmittel-Zylindereinheit zum Abklappen des Maschinenrahmens vorgesehen ist, die an den beiden Rahmenteilen oder damit verbundenen Klapphebelteilen angelenkt ist.

Aus den Schriften DE 198 17 608 A1, US 2012/247378 A1, US 4 128 131 A und US 3 941 194 A ist es bekannt, solche Druckmittelzylindereinheiten zum Abklappen des Maschinenrahmens eines landwirtschaftlichen Geräts im Inneren eines der klappbaren Rahmenteile anzuordnen.

Um bei landwirtschaftlichen Geräten große Arbeitsbreiten im Feldbetrieb realisieren zu können, andererseits aber die für den Straßentransport maximal zulässige Gerätebreite einzuhalten, können klappbare Maschinenrahmen verwendet werden, um in der Arbeitsstellung beispielsweise seitlich ausladende Maschinensektionen für den Straßentransport wegklappen zu können. Solche Maschinenrahmen einschließlich ihrer wegklappbaren Rahmenteile können dabei Arbeitswerkzeuge und/oder Hilfsmodule tragen, die je nach Gerätetyp unterschiedlich ausgebildet sein können. Beispielsweise können bei einem Bodenbearbeitungsgerät Bodenbearbeitungswerkzeuge wie Scharscheiben, Grubberzinken, Packerräder oder Walzenelemente und als Hilfsmodule Seitenbegrenzungsschilde und dergleichen an dem abklappbaren Rahmenteil und/oder dem festen Rahmenteil aufgehängt sein. Bei Grünlandgeräten können beispielsweise Schwader- oder Zetterkreisel, Mähwerkstrommeln, Konditioniererwerkzeuge oder Querförderschnecken bzw. -bänder an den genannten Rahmenteilen aufgehängt sein.

Bei vielen Gerätschaften erstrecken sich die klappbaren Rahmenteile in der Arbeitsstellung in einer liegenden Ausrichtung quer zur Fahrtrichtung und können um eine liegende, in Fahrtrichtung weisende Klappachse in eine aufrechte Transportstellung verschwenkt werden, wobei zum Verschwenken bzw. Abklappen regelmäßig eine Druckmittelzylindereinheit verwendet wird, die jeweils gelenkig an den beiden zueinander abklappbaren Rahmenteilen angelenkt ist. Die beiden Rahmenteile können einerseits den nach oben klappbaren Rahmenteil und andererseits einen auch in der Transportstellung liegend ausgerichtet bleibenden Rahmenteil umfassen, wobei jedoch je nach Maschinenkonfiguration auch beide Rahmenteile abklappbar sein können, beispielsweise dergestalt, dass ein erster Rahmenteil relativ zum zweiten abklappbar und der zweite Rahmenteil relativ zu einem dritten Rahmenteil abklappbar ist.

Da für den Straßentransport auch die maximale Transporthöhe beschränkt ist, ist es bisweilen nicht ausreichend, einen Rahmenteil in eine senkrechte Transportstellung zu verbringen. Um hier Abhilfe zu schaffen wurde bereits vorgeschlagen, den Rahmenteil um mehr als 90°, beispielsweise bis zu etwa 180° abzuklappen, sodass der abgeklappte Rahmenteil auf dem Rücken des anderen Rahmenteils zu liegen kommt. Ungeachtet der genannten Höhenproblematik kann dies auch vorteilhaft sein, um Sicherheitsrisiken durch seitlich nach außen abstehende Arbeitswerkzeuge zu vermeiden bzw. die Transportbreite weiter zu reduzieren, da bei einem Abklappen über 90° hinaus die ansonsten seitlich nach außen abstehenden Arbeitswerkzeuge noch weiter nach innen verbracht werden.

Bei solchen um deutlich mehr als 90° abklappbaren Rahmenteilen ist die von der Druckmittelzylindereinheit zu bewerkstelligende Kinematik jedoch nicht ganz einfach. Einerseits soll die effektive Stellkraftwirkung durch zu klein werdende Hebelarme und/oder zu schräg verlaufende Wirkungslinien nicht zu sehr beeinträchtigt werden. Zum anderen soll die Anordnung des Druckmittelzylinders kompakt bleiben, um nicht zu viel Bauraum zu benötigen bzw. ein zu großes Kollisionspotential zu schaffen.

Bei Klapprahmensystemen, welche einen Klappwinkel von bis zu 180° erlauben, ist es daher bekannt, eine sogenannte Dreigelenk-Bogenanlenkung vorzusehen. Hierbei wird die Kraft des Druckmittelzylinders entsprechend der momentanen Stellung des Dreigelenk-Bogens umgelenkt. Nachteilig ist hieran jedoch, dass aufgrund der Übersetzung immer nur ein Teil der Zylinderkraft in Drehmoment umgewandelt werden kann. Der Rest der Stellkraft muss durch die Auflage aufgenommen werden.

Alternativ wurde für solche Klapprahmensysteme bereits vorgeschlagen, die Stellkraft des Druckmittelzylinders über einen Umlenkhebel in eine Klappbewegung bzw. ein entsprechendes Drehmoment umzusetzen. Hierbei wird zwar ein besserer Wirkungsgrad bzw. eine höhere Effizienz erreicht, was die Umwandlung der Zylinderstellkraft in Drehmoment anbelangt. Allerdings ergeben sich für die Zylinderanordnung Platzprobleme bzw. Restriktionen für die Größe des verwendbaren Zylinders, was wiederum mit dem Problem einhergeht, eine ausreichend hohe Stellkraft bereitstellen zu können. Dies ist insbesondere von Bedeutung, wenn schwere, große Maschinensektionen abzuklappen sind, was beispielsweise bei Geräten mit sehr großen Arbeitsbreiten und/oder schweren Werkzeugen am abklappbaren Rahmenteil der Fall sein kann.

Ein landwirtschaftliches Anbaugerät mit einem klappbaren Maschinenrahmen zeigt beispielsweise die EP 2 055 164 B1, wobei hier Packerwalzen als Arbeitswerkzeuge an den zueinander abklappbaren Rahmenteilen aufgehängt sind und ein Hydraulikzylinder jeweils gelenkig an den beiden Rahmenteilen angelenkt ist. Allerdings ist hier die Kinematik der Stellzylinderanordnung so beschaffen, dass ein Abklappen über 90° hinaus dazu führen würde, dass der abgeklappte Rahmenteil nicht mehr zurückgeklappt werden könnte. Zum anderen benötigt die Zylinderanordnung relativ viel Bauraum vom Rahmenträgerholm quer nach unten, was zwar bei Packerradwalzen vertretbar ist, bei nach hinten auswerfenden Arbeitswerkzeugen wie beispielsweise Rechkreiseln jedoch sehr störend ist.

Aus der Schrift EP 1 616 471 A2 ist ferner ein Bodenbearbeitungsgerät bekannt, an dessen Maschinenrahmen Rillenwalzensegmente aufgehängt sind. Die Hydraulikzylinder zum Ausheben bzw. Abklappen der seitlich auskragenden Rahmenteile sind hierbei oberhalb des Maschinenrahmens angeordnet. Zwar können mittels zusätzlicher, schwimmend aufgenommener Kolben im Zylinder die Stellwege bzw. Endstellungen der mit den Kolbenstangen verbundenen Kolben und damit die Stellwege und Endstellungen der Zylindereinheiten eingestellt werden. Jedoch verhindert die Kinematik der Kolbenanordnung auch hier ein Überstrecken der abklappbaren Rahmenteile über die 90°-Stellung hinaus. Zudem lässt auch diese Schrift das Problem ungelöst, bei begrenztem Bauraum für die Hydraulikzylinder eine ausreichende Stellkraft bereitzustellen.

Der vorliegenden Erfindung liegt die Aufgabe zugrunde, ein verbessertes landwirtschaftliches Gerät der eingangs genannten Art zu schaffen, das Nachteile des Standes der Technik vermeidet und letzteren in vorteilhafter Weise weiterbildet. Insbesondere soll auch für um bis zu 180° abklappbare Rahmenteile eine kompakte, platzsparende Anordnung der Druckzylindereinheiten geschaffen werden, die dennoch ausreichend große Stellkräfte zum Abklappen auch schwerer Maschinensektionen bereitstellen kann.

Erfindungsgemäß wir die genannte Aufgabe durch ein landwirtschaftliches Gerät gemäß Anspruch 1 gelöst. Bevorzugte Ausgestaltungen der Erfindung sind Gegenstand der abhängigen Ansprüche.

Um eine kompakte Anordnung ohne größeres Kollisionspotential zu schaffen, wird vorgeschlagen, die Druckmittelzylindereinheit in einem der beiden zueinander abklappbaren Rahmenteile unterzubringen. Erfindungsgemäß ist die Druckmittelzylindereinheit zumindest teilweise in das Innere eines der Rahmenteile integriert. Insbesondere kann die Druckmittelzylindereinheit in einem länglichen Rahmenhohlprofil untergebracht sein, das sich mit seiner Längsachse quer zur Klappachse zwischen den beiden klappbaren Rahmenteilen erstreckt, beispielsweise liegend quer zur Fahrtrichtung. Das genannte Hohlprofil kann dabei ein Rohrprofil oder ein U-Profil sein, wobei im letzteren Fall die Druckmittelzylindereinheit zumindest teilweise zwischen den gegenüberliegenden Schenkeln des U-Profils aufgenommen sein kann.

In Weiterbildung der Erfindung kann zumindest ein Teil des Zylinders der Druckmittelzylindereinheit im Inneren des Rahmenteils aufgenommen sein, während beispielsweise ein Teil der ausfahrbaren Kolbenstange und/oder ein Teil des Zylinders außerhalb des Rahmenteils angeordnet sein kann. In Weiterbildung der Erfindung kann die Druckmittelzylindereinheit jedoch auch im Wesentlichen vollständig einschließlich des Zylinders und der Kolbenstange im Inneren des als Hohlprofil ausgebildeten Rahmenteils aufgenommen sein.

Um trotz begrenztem Einbauraum und/oder Durchmesser der Druckmittelzylindereinheit ausreichende Stellkräfte bereitstellen zu können, besitzt nach der vorliegenden Erfindung die Druckmittelzylindereinheit eine Kolbenstange, an der zumindest zwei Kolben voneinander beabstandet befestigt sind. Hierbei sind zwei voneinander separate Druckmittelkammern vorgesehen, die auf einander entsprechenden Seiten der beiden Kolben angeordnet sind, sodass die beiden Kolben und damit die gemeinsame Kolbenstange durch Druckmittel in dieselbe Richtung beaufschlagbar sind. Wird jeweils Druckmittel in die beiden Druckmittelkammern eingeleitet, treiben beide Kolben die Kolbenstange in dieselbe Richtung und die Kolbenstellkräfte addieren sich miteinander auf. Hierdurch lässt sich einerseits die Stellkraft der Kolbenstange leicht steuern, indem beispielsweise nur eine der beiden Druckmittelkammern oder eben beide Druckmittelkammern gleichzeitig mit Druckmittel beaufschlagt werden. Werden beide Druckmittelkammern gleichzeitig mit Druckmittel beaufschlagt, verdoppeln sich zudem die Stellkräfte und die Druckmittelzylindereinheit kann eine Stellkraft bereitstellen, für die ein Einkolbensystem eine doppelt so große Kolbenfläche und damit einen entsprechend größeren Durchmesser benötigen würde. Das "Verdoppeln" ist näherungsweise zu verstehen, soweit der Kolben nur zwei Ringkolbenflächen besitzen kann. Somit kann mit kleineren Drücken und/oder kleineren Durchmessern und/oder kleineren Einbauräumen eine gleichwohl große Stellkraft bereitgestellt werden.

In vorteilhafter Weiterbildung der Erfindung kann die Druckmittelzylindereinheit doppelt wirkend ausgebildet sein, was insbesondere von Vorteil ist, um ein Abklappen der Rahmenteile um deutlich mehr als 90° zueinander, beispielsweise um bis zu etwa 180° zueinander zu ermöglichen und dabei die Rückstellung sicherzustellen. Insbesondere können bei einer solchen doppelt wirkenden Druckmittelzylindereinheit vier voneinander separate Druckmittelkammern vorgesehen sein, die jeweils paarweise den beiden genannten Kolben zugeordnet sind, sodass jeder der beiden Kolben von gegenüberliegenden Seiten her mit Druckmittel beaufschlagbar ist.

Die genannten Druckmittelkammern können hierbei jeweils parallel geschaltet zueinander paarweise oder gruppenweise mit einer Druckzufuhrleitung und/oder Druckentweichleitung verbindbar sein, insbesondere dergestalt, dass auf entsprechenden Seiten der Kolben liegende Druckmittelkammern gleichzeitig druckbeaufschlagt bzw. gleichzeitig druckentlastet werden. Hierdurch addieren sich die Stellkräfte in dieselbe Richtung an den verschiedenen Kolben auf, sodass mit beiden Kolbenquerschnitten große Stellkräfte erzeugt werden können. Je nach beaufschlagten Druckmittelkammern wird dabei eine Stellbewegung in die eine Richtung oder in die entgegengesetzte Richtung erzeugt.

In Weiterbildung der Erfindung können auch mehr als zwei Kolben, beispielsweise drei, vier oder fünf Kolben auf einer gemeinsamen Kolbenstange voneinander beabstandet befestigt sein, um nicht nur eine Verdoppelung, sondern eine Verdreifachung, Vervierfachung oder Verfünffachung der Stellkräfte zu erzielen. Hierbei sind in analoger Weise mehr als zwei, beispielsweise drei, vier oder fünf voneinander separate Druckmittelkammern vorgesehen, durch die die Kolben jeweils in dieselbe Richtung beaufschlagbar sind. Ist die Druckmittelzylindereinheit in der vorgenannten Weise doppelt wirkend ausgebildet, können in analoger Weise, drei, vier, fünf oder allgemein mehr als zwei Paare von Druckmittelkammern vorgesehen sein, die jeweils auf gegenüberliegenden Seiten eines jeweiligen Kolbens angeordnet sind, sodass der jeweilige Kolben in die eine und in die entgegengesetzte andere Richtung beaufschlagbar ist.

Eine Druckmittelzylindereinheit mit nur zwei oder ggfs. drei voneinander beabstandet, an einer gemeinsamen Kolbenstange befestigten Kolben, stellt jedoch einen guten Kompromiss zwischen hohen Stellkräften bei begrenztem Durchmesser der Druckmittelzylindereinheit und andererseits keinen übermäßigen axialen Baulängen dar.

Anstelle der vorgenannten Parallelschaltung der Anschlüsse der Druckmittelkammern, die den separaten Kolben zugeordnet sind, an eine gemeinsame Druckanschlussleitung bzw. eine gemeinsame Druckentlastungsleitung können die Druckmittelkammern in Weiterbildung der Erfindung auch separat an verschiedene Druckquellen angeschlossen werden und/oder an verschiedene Druckleitungen angebunden sein, die ggfs. über eine Ventilanordnung zu- und wegschaltbar sind.

In Weiterbildung der Erfindung kann die Druckmittelzylindereinheit fest mit einem der zueinander verschwenkbaren Rahmenteile verbunden sein, insbesondere axial fest und unverschwenkbar gegenüber dem genannten Rahmenteil, sodass lediglich der axial verstellbare Teil der Druckmittelzylindereinheit, insbesondere deren Kolbenstange, axial relativ zu dem Rahmenteil verfahrbar ist. Beispielsweise kann der Zylinder der Druckmittelzylindereinheit fest an dem Rahmenteil fixiert sein, beispielsweise starr im Inneren des Rahmenhohlprofils aufgenommen sein, sodass lediglich die Kolbenstange ein- und ausfahrbar ist, wobei der Ein- und Ausfahrbereich der Kolbenstange ebenfalls im Wesentlichen vollständig innerhalb des Rahmens liegen kann.

Um die axiale Stellbewegung der Druckmittelzylindereinheit in die gewünschte Schwenkbewegung des klappbaren Rahmenteils umzusetzen, kann zwischen dem axial verstellbaren Teil der Druckmittelzylindereinheit und dem abklappbaren Rahmenteil ein Schwenk- und/oder Stellhebelteil angeordnet sein, das einerseits gelenkig an dem abklappbaren Rahmenteil und andererseits gelenkig an dem axial verstellbaren Teil der der Druckmittelzylindereinheit, insbesondere deren Kolbenstange, angelenkt sein kann.

Die Klappachse zwischen den beiden zueinander klappbaren Rahmenteilen kann sich vorteilhafterweise liegend, etwa fahrtrichtungsparallel erstrecken nach oben klappen zu können. Je nach Konfiguration des landwirtschaftlichen Geräts und dessen Maschinenrahmens kann sich die genannte Klappachse jedoch auch in einer anderen Raumrichtung erstrecken, beispielsweise liegend quer zur Fahrtrichtung, wenn ein nach hinten auskragender Rahmenteil und/oder ein nach vorne auskragender Rahmenteil nach oben verklappbar sein soll.

Ungeachtet der konkreten Raumausrichtung der Klappachse kann es vorteilhaft sein, wenn die Klappachse quer zur Längsachse der Druckmittelzylindereinheit und/oder quer zur Längsmittelachse des Maschinenrahmenprofils, dem die Druckmittelzylindereinheit zugeordnet ist, versetzt und/der beabstandet angeordnet ist, insbesondere oberhalb des Rahmenteils bzw. dessen Längsmittelachse, an welchem Rahmenteil der Druckmittelzylinder befestigt ist.

Der vorgenannte Klapphebelteil bzw. Klappgestängeteil, der zwischen der Kolbenstange der Druckmittelzylindereinheit und dem klappbaren Rahmenteil vorgesehen ist, kann vorteilhafterweise dazu vorgesehen und ausgebildet sein, zumindest teilweise in das Innere des Rahmenteils einzufahren, in dem auch die Druckmittelzylindereinheit integriert ist. Insbesondere kann der genannte Klapphebelteil in einer Klappstellung des Rahmenteils im Wesentlichen vollständig in den Rahmenteil eingefahren sein und in der entgegengesetzten Klappstellung im Wesentlichen vollständig aus dem Rahmenteil ausgefahren sein.

Um Querkräfte durch das genannte Klapphebelteil besser abzufangen bzw. die Kolbenstange vor übermäßigen Querkräften und/oder Biegemomenten zu schützen, kann die Kolbenstange im Bereich des Anlenkpunkts des genannten Klapphebelteils an dem Rahmenteil, an dem die Druckmittelzylindereinheit befestigt ist, schiebegeführt sein. Ist die Druckmittelzylindereinheit in den Rahmenteil integriert, kann der Kopf der Kolbenstange mit einem Schlittenführungsteil versehen sein, das an den Innenwandungen des Rahmenteils gleit- und/oder wälzlagergeführt ist.

Die Erfindung wird nachfolgend anhand eines bevorzugten Ausführungsbeispiels und zugehöriger Zeichnungen näher erläutert. In den Zeichnungen zeigen:
- Fig. 1:: eine schematische perspektivische Darstellung eines landwirtschaftlichen Anbaugeräts mit klappbarem Maschinenrahmen nach einer vorteilhaften Ausführung der Erfindung, wobei das Anbaugerät als Bodenbearbeitungsgerät ausgebildet ist und zwei klappbare, seitliche Rahmenteile in ihrer abgesenkten Arbeitsstellung dargestellt sind, wobei die Teilansichten (a) und (b) das Anbaugerät schräg von hinten bzw. schräg von vorne zeigen,
- Fig. 2:: eine schematische perspektivische Darstellung des Anbaugeräts aus Fig. 1, wobei die seitlichen, klappbaren Rahmenteile in einer nach oben geschwenkten Außerbetriebs- und/oder Transportstellung gezeigt sind, wobei die Teilansichten (a) und (b) das Anbaugerät wiederum schräg von hinten bzw. schräg von vorne zeigen,
- Fig. 3:: eine Frontansicht des Anbaugeräts aus den vorhergehenden Figuren, wobei die seitlichen Rahmenteile mit den daran aufgehängten Arbeitswerkzeugen in der abgesenkten Arbeitsstellung gezeigt sind,
- Fig. 4:: eine Frontansicht des Anbaugeräts ähnlich Fig. 3, wobei der in der Zeichnung linke Rahmenteil teilweise nach oben geklappt ist,
- Fig. 5:: eine Frontansicht des Anbaugeräts ähnlich Fig. 3 und 4, wobei der in der Zeichnung linke seitliche, klappbare Rahmenteil in einer um etwa 120° nach oben geschwenkten Stellung gezeigt ist,
- Fig. 6:: eine Frontansicht des Anbaugeräts ähnlich den Figuren 3 bis 5, wobei der in der Zeichnung linke klappbare Rahmenteil mit den daran aufgehängten Arbeitswerkzeugen in eine um etwa 180° nach oben verschwenkte Transportstellung gezeigt ist, und
- Fig. 7:: eine schematische Darstellung der Anordnung der Druckmittelzylindereinheit zum Verschwenken des Rahmenteils des Anbaugeräts aus den vorhergehenden Figuren, die die Integration der Druckmittelzylindereinheit in einen Rahmenteil und dessen gelenkige Anbindung an den dazu abklappbaren Rahmenteil mittels eines Klapphebelteils zeigt, wobei die Teilansicht (a) eine erste Klappstellung, insbesondere die abgesenkte Arbeitsstellung, und die Teilansicht (b) eine zweite, zu der ersten um 180° verschwenkte Klappstellung, insbesondere die Transportstellung, zeigt.

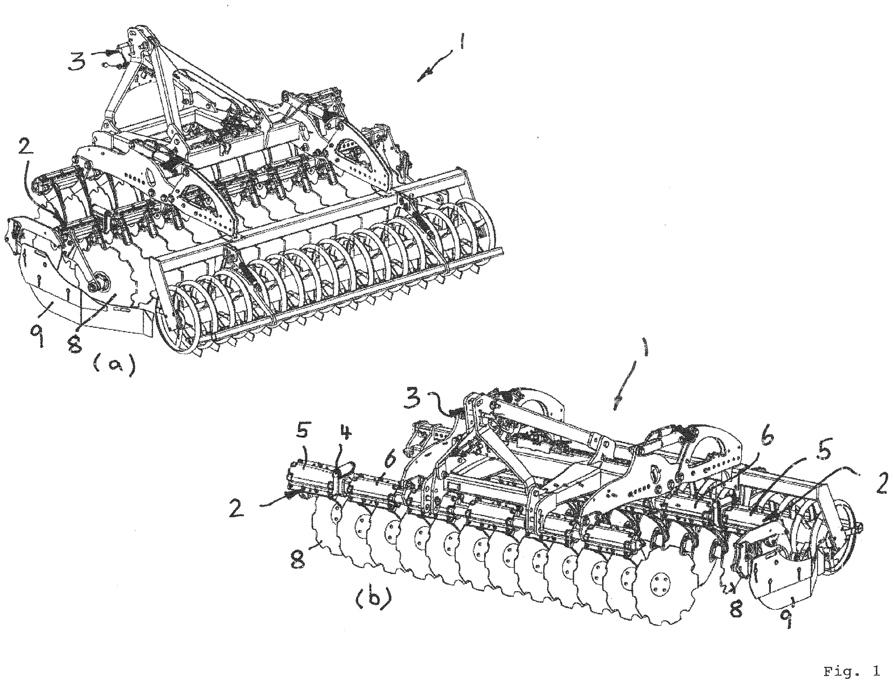

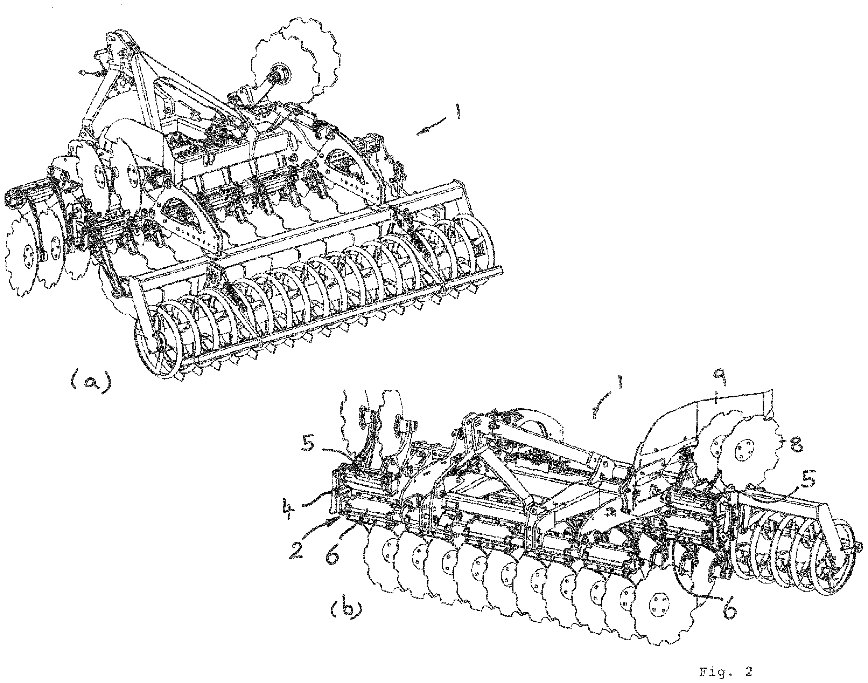

Wie die Figuren 1 und 2 zeigen, kann ein landwirtschaftliches Gerät 1 nach einer Ausführung der Erfindung ein Anbaugerät sein, dessen Maschinenrahmen 2 mittels eines Anbaubocks 3 über eine nicht eigens gezeigte Dreipunktanlenkung mit Oberund Unterlenkern an einen Schlepper anbaubar ist. Es versteht sich jedoch dass das Anbaugerät auch als Aufsattelgerät ausgebildet und mittels einer Deichsel an den Schlepper anlenkbar ist.

Wie die Figuren zeigen, kann das Anbaugerät 1 beispielsweise als Bodenbearbeitungsgerät in Form einer Scheibenegge mit zwei Scheibeneggen-Reihen und einer nachlaufenden Nachbearbeitungseinheit ausgebildet sein. Es versteht sich jedoch, dass das Anbaugerät auch anders ausgebildet sein kann, beispielsweise als Grünlandgerät.

Der vorgenannte Maschinenrahmen 2 ist, wie Figur 2 zeigt, abklappbar ausgebildet und kann insbesondere seitliche Maschinensektionen umfassen, welche aus einer abgesenkten Arbeitsstellung in eine nach oben geschwenkte Außerbetriebs- bzw. Transportstellung geschwenkt werden können. Hierbei kann zwischen den zueinander verschwenkbaren Rahmenteilen eine Klappachse 4 vorgesehen sein, die sich beispielsweise liegend, etwa fahrtrichtungsparallel erstrecken kann.

Insbesondere können seitlich auskragende und/oder in Fahrtrichtung betrachtet rechts und links angeordnete Rahmenteile 5 relativ zu einem dazu benachbarten Rahmenteil 6, welches beispielsweise einen zentralen Rahmenteil bilden kann, abklappbar sein.

Der Maschinenrahmen 2 kann grundsätzlich verschieden ausgebildet sein und beispielsweise einen länglichen Rahmenträgerholm 7 umfassen, der in zumindest zwei zueinander abklappbare Rahmenteile 5 und 6 untergliedert ist. Der genannte Rahmenträgerholm 7 kann sich beispielsweise liegend quer zur Fahrtrichtung erstrecken, wobei sich die beiden Rahmenteile 5 und 6 in einer Klappstellung, insbesondere der abgesenkten Arbeitsstellung, zueinander parallel, insbesondere mit ihren Längsmittelachsen fluchtend miteinander erstrecken können. An dem Rahmenträgerholm 7 können Arbeitswerkzeuge 8 beispielsweise in Form von Bodenbearbeitungswerkzeugen wie den gezeigten Scheibeneggen bzw. Scharscheiben aufgehängt sein, wobei auch an dem abklappbaren Rahmenteil solche Arbeitswerkzeuge 8 aufgehängt sein können, sodass die Arbeitswerkzeuge 8 mit dem Rahmenteil 5 nach oben geschwenkt werden können. Wie Fig. 2 zeigt, können an dem abklappbaren Rahmenteil 5 auch weitere Hilfsaggregate wie beispielsweise Seitenbegrenzungsschilde 9 aufgehängt sein.

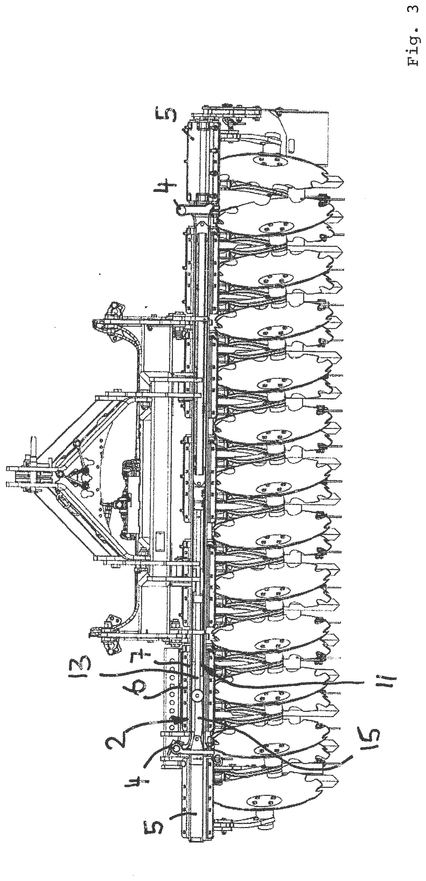

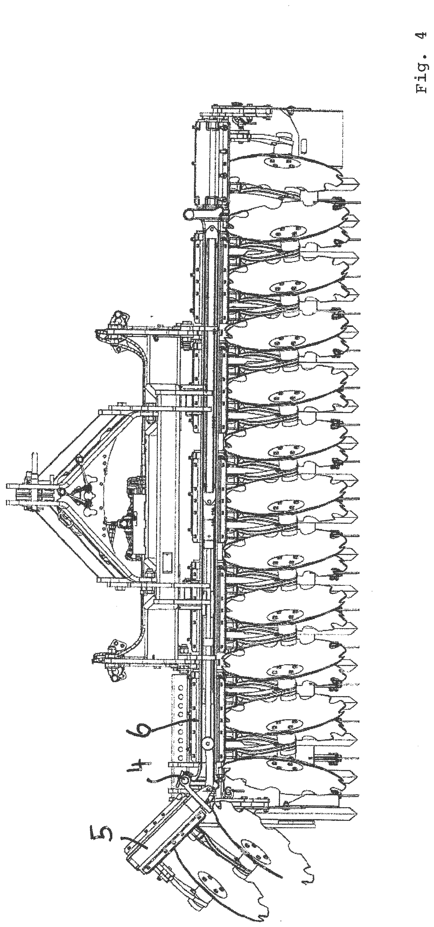

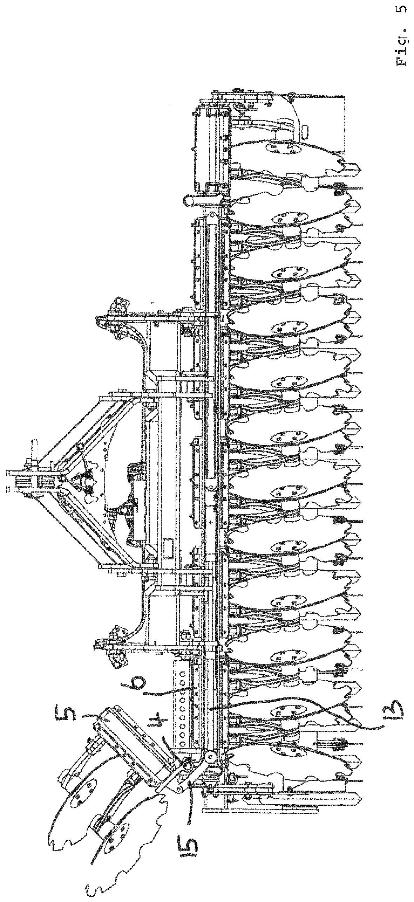

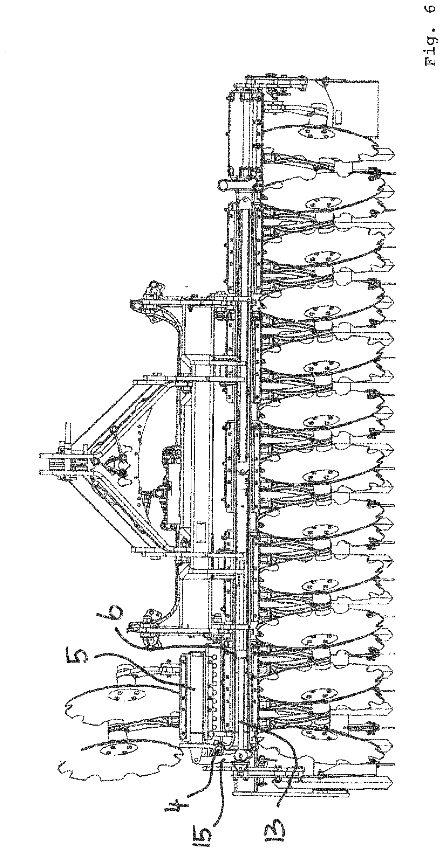

Wie die Figuren 3 bis 6 zeigen, kann der klappbare Rahmenteil um die liegende, sich beispielsweise in Fahrtrichtung erstreckende Klappachse 4 nach oben geschwenkt werden, wobei der klappbare Rahmenteil 5 um deutlich mehr als 90°, beispielsweise etwa 180° verschwenkbar sein kann. Insbesondere können die beiden Rahmenteile 5 und 6 aus einer nebeneinander liegenden Klappstellung, in der sich die beiden Rahmenteile 5 und 6 im Wesentlichen entlang einer gemeinsamen Längsachse erstrecken können und aneinander anschließen können, in eine dazu um etwa 180° verschwenkte zweite Klappstellung verbracht werden, in der die beiden Rahmenteile im Wesentlichen Rücken an Rücken aneinander liegen und/oder sich einander überlappend erstrecken.

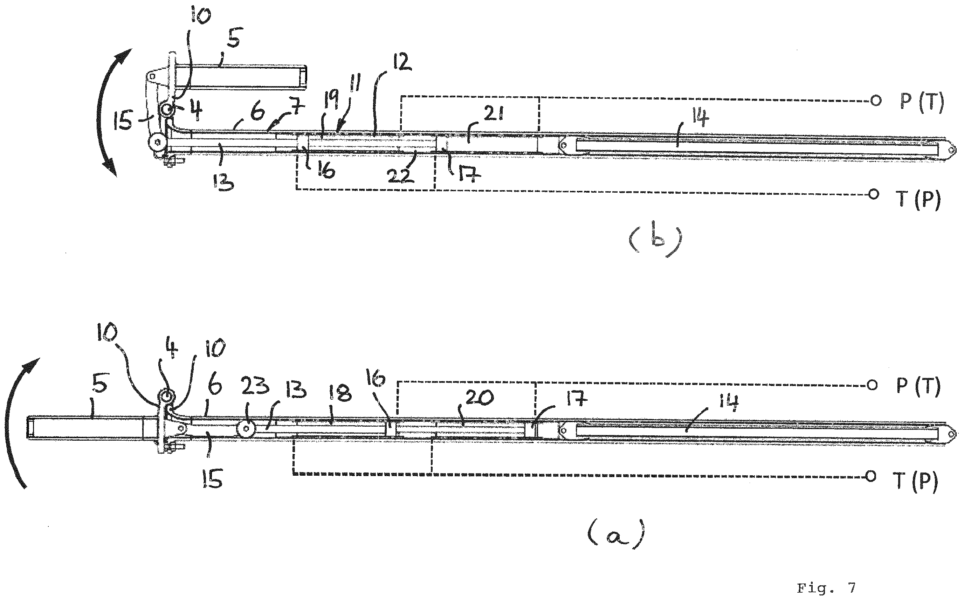

Wie Fig. 7 verdeutlicht, kann die Klappachse 4 zwischen den beiden zueinander klappbaren Rahmenteilen 5 und 6 bezogen auf die Längsmittelachse der beiden Rahmenteile 5 und 6 quer beabstandet angeordnet sein, insbesondere ein Stück weit oberhalb der beiden Rahmenteile 5 und 6 angeordnet sein, wenn sich diese in der ausgeklappten Arbeitsstellung gemäß Fig. 7(a) befinden. Die beiden durch die Klappachse 4 miteinander verbundenen Rahmenteile 5 und 6 können an ihren einander benachbarten Endabschnitten quer auskragende Verbindungskonsolen bzw. -flansche 10 besitzen, die jeweils ein Lagerauge bilden können und durch die genannte Klappachse 4 miteinander schwenkbar verbunden sind.

Um die Stellbewegung zum Verklappen der beiden Rahmenteile 5 und 6 zu erzeugen, ist eine Druckmittelzylindereinheit 11 vorgesehen, die eine aus einem Zylinder 12 ausfahrbare Kolbenstange 13 umfassen kann.

Die genannte Druckmittelzyindereinheit 11 ist vorteilhafterweise in das Innere des Maschinenrahmens 2 integriert, insbesondere im Inneren eines der zueinander abklappbaren Rahmenteile 6 aufgenommen. Der genannte Rahmenteil 6 bzw. dessen Rahmenträgerholmabschnitt 7 kann als längliches Hohlprofil mit einem beispielsweise rohrförmigen oder U-förmigen Querschnitt ausgebildet sein, in dessen Innenraum die Druckmittelzylindereinheit 11 aufgenommen ist, vgl. Fig. 7.

Die Druckmittelzylindereinheit 11 kann hierbei im Wesentlichen vollständig im Inneren des Rahmenteils 6 aufgenommen sein, wobei auch der axiale Verstellbereich der Kolbenstange 13 im Wesentlichen vollständig im Inneren des Rahmenteils 6 liegen kann.

Die Druckmittelzylindereinheit 11 ist vorteilhafterweise an dem Rahmenteil 6 starr befestigt bzw. relativ zu dem Rahmenteil 6 unbeweglich gehalten. In axialer Richtung kann die Druckmittelzylindereinheit 11 beispielsweise durch die Haltestange 14 fixiert sein, mit der beispielsweise auf gegenüberliegenden Endabschnitten vorgesehene Druckmittelzylindereinheiten 11, insbesondere deren Zylinder 12 gegeneinander abgestützt sein können. Die Druckmittelzylindereinheit 11 ist ferner vorteilhafterweise auch unverschwenkbar an dem Rahmenteil 6 befestigt, beispielsweise durch passgenaue Aufnahme im Inneren des Rahmenteils 6. Insbesondere kann im Wesentlichen lediglich die Kolbenstange 13 axial relativ zum Rahmenteil 6 bewegt, nämlich ein- und ausgefahren werden.

Wie Fig. 7 zeigt, kann die Kolbenstange 13 der Druckmittelzylindereinheit 11 über ein Klapphebelteil 15 mit dem klappbaren Rahmenteil 5 verbunden sein. Das genannte Klapphebelteil 15 kann ein starres Gestängeteil sein und/oder einerseits gelenkig an der Kolbenstange 13 und andererseits gelenkig am Rahmenteil 5 angelenkt sein. Wie Fig. 7 zeigt, kann das Klapphebelteil 15 derart angeordnet und ausgebildet sein, dass das Klapphebelteil 15 in das Innere des Rahmenteils 6 einfahrbar ist, in dem die Druckmittelzylindereinheit 11 aufgenommen ist. Insbesondere kann das Klapphebelteil 15 dazu vorgesehen sein, in einer Klappstellung im Wesentlichen vollständig in das Rahmenteil 6 eingefahren zu sein und in einer anderen Klappstellung des Rahmenteils 5 im Wesentlichen vollständig aus dem Rahmenteil 6 ausgefahren zu sein, vgl. vergleichend Teilansichten (a) und (b) der Fig. 7.

Die Kolbenstange 13 schiebt dabei das Klapphebelteil 15 einerseits aus dem Rahmenteil 6 heraus und zieht es andererseits in das Rahmenteil 6 hinein. Die Stellbewegung der Kolbenstange 13 wird über das Klapphebelteil 15 in eine Schwenkbewegung des Rahmenteils 5 umgesetzt.

Wie Fig. 7 zeigt, sind an der Kolbenstange 13 der Druckmittelzylindereinheit 11 vorteilhafterweise voneinander beabstandet zwei separate Kolben 16 und 17 befestigt, die von voneinander getrennten Druckmittelkammern 18 und 19 sowie 20 und 21 beaufschlagbar sind.

Insbesondere kann der Zylinder 12 der Druckmittelzylindereinheit 11 durch eine Trennwand 22 unterteilt und in zwei Zylinderkammern aufgeteilt sein, die wiederum von den Kolben 16 und 17 jeweils in zwei Druckmittelkammern 18 und 19 bzw. 20 und 21 unterteilt sind. Die Kolbenstange 13 tritt durch die genannte Trennwand 22 hindurch, wobei der Durchtritt abgedichtet sein kann, sodass beidseits der Trennwand 22 Druckmittelkammern 19 und 20 gebildet sind. Alternativ können die beiden Kolben 16 und 17 auch in voneinander gänzlich separaten Zylindern aufgenommen sein, die beide am Rahmenteil 6 fixiert sein können.

Der zumindest eine Zylinder 12 kann als separater Korpus an das Rahmenteil angebaut bzw. darin eingesetzt sein. Gegebenenfalls kann der Zylinder 12 auch direkt von Wandungen des Rahmenteils 6 gebildet sein.

Die auf einander entsprechenden Seiten der beiden Kolben 16 und 17 liegenden Druckmittelkammern 18 und 20 bzw. 19 und 21 können dabei jeweils parallel geschaltet mit einer Druckzufuhrleitung bzw. einer Druckentlastungsleitung verbunden sein, um gemeinsam druckbeaufschlagt bzw. druckentlastet zu werden, vgl. Fig. 7. In der Orientierung gemäß Fig. 7 können dabei die jeweils rechts der Kolben 16 und 17 liegenden Druckmittelkammern 19 und 21 mit der Leitung P(T) verbunden sein, während die links der Kolben liegenden Druckmittelkammern 18 und 20 zueinander parallelgeschaltet mit der Leitung bzw. dem Anschluss T(P) verbunden sein können.

Funktional gesprochen sind also die beiden Druckmittelkammern 19 und 21, die ein Ausfahren der Kolbenstange 13 bewirken, zueinander parallel geschaltet und die beiden Druckmittelkammern 18 und 20, die ein Einfahren der Kolbenstange 13 bewirken, ebenfalls miteinander parallel geschaltet. Je nachdem, ob die Kolbenstange ein- oder ausgefahren werden soll, werden die Druckmittelkammern 19 und 21 druckbeaufschlagt und gleichzeitig die Druckmittelkammern 18 und 20 druckentlastet, oder umgekehrt die Druckmittelkammern 19 und 20 druckentlastet und die Druckmittelkammern 18 und 20 druckbeaufschlagt. Dies kann durch die in Fig. 7 gezeigte Parallelschaltung, aber auch durch separate Druckbeaufschlagungsanschlüsse bzw. Druckquellen erfolgen.

Die Kolbenstange 13 kann vorteilhafterweise im Bereich des Verbindungsgelenks, an dem der Klapphebelteil 15 angelenkt ist, abgestützt und/oder geführt sein, insbesondere an dem Rahmenteil 6, an dem die Druckmittelzylindereinheit 11 befestigt ist. Beispielsweise kann die Kolbenstange 13 einen Führungsschlitten 23 aufweisen, der an dem Rahmenteil 6 längsverschieblich und in Querrichtung abgestützt geführt ist, beispielsweise durch geeignete Gleit- oder Wälzlager.

## Patentansprüche

1. Landwirtschaftliches Gerät, insbesondere an einen Schlepper anbaubares Anbaugerät, mit einem Maschinenrahmen (2), der zumindest zwei zueinander abklappbare Rahmenteile (5,6) umfasst, wobei eine Druckmittelzylindereinheit (11) zum Abklappen des Maschinenrahmens (2) vorgesehen ist, die an den beiden Rahmenteilen (5,6) oder damit verbundenen Klapphebelteilen (15) angelenkt ist, wobei die Druckmittelzylindereinheit (11) zumindest teilweise in das Innere eines der beiden Rahmenteile (6) integriert ist, **dadurch gekennzeichnet, dass** die Druckmittelzylindereinheit (11) eine Kolbenstange (13), an der zwei Kolben (16,17) voneinander beabstandet befestigt sind, sowie zwei Druckmittelkammern (18, 19, 20, 21), die die beiden Kolben (16,17) und damit die Kolbenstange (13) in dieselbe Richtung beaufschlagen, aufweist.

2. Landwirtschaftliches Gerät nach dem vorhergehenden Anspruch, wobei die Druckmittelzylindereinheit (11) im Wesentlichen vollständig einschließlich eines Zylinders (12) und einer Kolbenstange (13) im Inneren des als Hohlprofil ausgebildeten Rahmenteils (6) aufgenommen ist.

3. Landwirtschaftliches Gerät nach dem vorhergehenden Anspruch, wobei die Druckmittelzylindereinheit (11) doppelt wirkend ausgebildet ist und vier Druckmittelkammern (18, 19, 20, 21) aufweist, die paarweise den zwei Kolben (16,17) zugeordnet sind, derart, dass jeder der beiden Kolben (16,17) wahlweise in die eine Richtung oder die entgegengesetzte andere Richtung beaufschlagbar und damit die Kolbenstange (13) durch Beaufschlagung beider Kolben (16,17) sowohl einfahrbar als auch ausfahrbar ist.

4. Landwirtschaftliches Gerät nach einem der vorhergehenden Ansprüche, wobei die Druckmittelzylindereinheit (11) drei oder mehr Kolben (16,17) aufweist, die voneinander beabstandet an einer gemeinsamen Kolbenstange (13) befestigt sind, wobei drei oder mehr Druckmittelkammern (18,20) vorgesehen sind, die die drei oder mehr Kolben (16,17) und damit die gemeinsame Kolbenstange (13) in dieselbe Richtung beaufschlagen.

5. Landwirtschaftliches Gerät nach einem der vorhergehenden Ansprüche, wobei alle Druckmittelkammern (18, 19, 20, 21), die die Kolben (16,17) und damit die Kolbenstange (13) in dieselbe Richtung beaufschlagen, zueinander parallel geschaltet und mit einem gemeinsamen Druckanschluss P(T) und/oder einem gemeinsamen Druckentlastungsanschluss T(P) verbunden sind.

6. Landwirtschaftliches Gerät nach einem der vorhergehenden Ansprüche, wobei die Druckmittelzylindereinheit (11) an einem der Rahmenteile (6) axial fest und unverschwenkbar befestigt ist und mit dem anderen, dazu abklappbaren Rahmenteil (5) durch ein Klapphebelteil (15) verbunden ist, das gelenkig an die Druckmittelzylindereinheit (11) angelenkt und/oder gelenkig an dem anderen Rahmenteil (5) angelenkt ist.

7. Landwirtschaftliches Gerät nach dem vorhergehenden Anspruch, wobei das genannte Klapphebelteil (15) in das Rahmenteil (6) einfahrbar ist, in dem die Druckmittelzylindereinheit (11) angeordnet ist, wobei insbesondere in einer ersten Klappstellung des Rahmenteils (5) das genannte Klapphebelteil (15) im Wesentlichen vollständig in dem Rahmenteil (6) aufgenommen und in der entgegengesetzten Klappstellung des Rahmenteils (5) das Klapphebelteil (15) im Wesentlichen vollständig aus dem Rahmenteil (6) ausgefahren ist.

8. Landwirtschaftliches Gerät nach einem der beiden vorhergehenden Ansprüche, wobei die Kolbenstange (13) im Bereich der Verbindung mit dem Klapphebelteil (15) durch einen Führungsschlitten (23) längsverschieblich und querabgestützt an dem Rahmenteil (6), an dem die Druckmittelzylindereinheit (11) befestigt ist, gelagert ist.

9. Landwirtschaftliches Gerät nach einem der vorhergehenden Ansprüche, wobei die beiden zueinander verschwenkbaren Rahmenteile (5,6) über einen Schwenkbereich von mehr als 120°, insbesondere etwa 180°, zueinander verschwenkbar sind.

10. Landwirtschaftliches Gerät nach dem vorhergehenden Anspruch, wobei die Druckmittelzylindereinheit (11) dazu vorgesehen ist, über den gesamten Schwenkbereich totpunktfrei wirksam zu sein und/oder über den gesamten Schwenkbereich eine Stellbewegung des Rahmenteils (5,6) zueinander bereitzustellen.

## Claims

1. Agricultural implement, in particular an attachment that can be mounted on a tractor, with a machine frame (2) which comprises at least two frame parts (5, 6) that can be folded down relative to one another, wherein a pressure medium cylinder unit (11) is provided for folding down the machine frame (2), which unit is articulated on the two frame parts (5, 6) or on folding lever parts connected thereto, wherein the pressure medium cylinder unit (11) is at least partially integrated into the interior of one of the two frame parts (6), **characterised in that** the pressure medium cylinder unit (11) comprises a piston rod (13), to which two pistons (16, 17) are attached spaced at a distance from one another, and two pressure medium chambers (18, 19, 20, 21) which pressurise the two pistons (16, 17) and thus the piston rod (13) in the same direction.

2. Agricultural implement according to the preceding claim, wherein the pressure medium cylinder unit (11) is taken up substantially completely including a cylinder (12) and a piston rod (13) in the interior of the frame part (6) formed as a hollow profile.

3. Agricultural implement according to the preceding claim, wherein the pressure medium cylinder unit (11) is designed to be double-acting and comprises four pressure medium chambers (18, 19, 20, 21), which are associated in pairs with the two pistons (16, 17) such that each of the two pistons (16, 17) can be pressurised optionally in one direction or in the opposed other direction and thus the piston rod (13) is both retractable and extendable by pressurising both pistons (16, 17).

4. Agricultural implement according to any one of the preceding claims, wherein the pressure medium cylinder unit (11) comprises three or more pistons (16, 17), which are attached spaced at a distance from one another on a common piston rod (13), wherein three or more pressure medium chambers (18, 20) are provided, which pressurise the three or more pistons (16, 17) and thus the common piston rod (13) in the same direction.

5. Agricultural implement according to any one of the preceding claims, wherein all pressure medium chambers (18, 19, 20, 21) that pressurise the pistons (16, 17) and thus the piston rod (13) in the same direction are connected in parallel and connected to a common pressure port P(T) and/or a common pressure relief port T(P).

6. Agricultural implement according to any one of the preceding claims, wherein the pressure medium cylinder unit (11) is attached axially fixedly and unpivotably to one of the frame parts (6) and is connected to the other frame part (5), which can fold down to it, by a folding lever part (15), which is articulated flexibly on the pressure medium cylinder unit (11) and/or is articulated flexibly on the other frame part (5).

7. Agricultural implement according to the preceding claim, wherein the folding lever part (15) is retractable into the frame part (6) in which the pressure medium cylinder unit (11) is arranged, wherein the folding lever part (15) is taken up substantially completely in the frame part (6) in a first folding position of the frame part (5) in particular and the folding lever part (15) is extended substantially completely out of the frame part (6) in the opposite folding position of the frame part (5).

8. Agricultural implement according to any one of the two preceding claims, wherein the piston rod (13) is supported in the area of the connection to the folding lever part (15) by a guide carriage (23) to be longitudinally movable and transversely supported on the frame part (6) to which the pressure medium cylinder unit (11) is attached.

9. Agricultural implement according to any one of the preceding claims, wherein the two frame parts (5, 6) that are pivotable relative to one another are pivotable relative to one another over a pivot range of more than 120°, in particular approximately 180°.

10. Agricultural implement according to the preceding claim, wherein the pressure medium cylinder unit (11) is provided to be effective over the entire pivot range without a dead centre and/or to provide an actuating movement of the frame part (5, 6) relative to one another over the entire pivot range.

## Revendications

1. Appareil agricole, en particulier outil porté pouvant être monté sur un tracteur, avec un châssis de machine (2), qui comprend au moins deux parties de châssis (5, 6) pouvant être rabattues l'une vers l'autre, dans lequel une unité de cylindre à agent sous pression (11) est prévue pour rabattre le châssis de machine (2), qui est articulée sur les deux parties de châssis (5, 6) ou sur des leviers basculants (15) reliés à celles-ci, dans lequel l'unité de cylindre à agent sous pression (11) est intégrée au moins en partie dans l'intérieur d'une des deux parties de châssis (6), **caractérisé en ce que** l'unité de cylindre à agent sous pression (11) présente une tige de piston (13), sur laquelle sont fixés de manière espacée l'un de l'autre deux pistons (16, 17), ainsi que deux chambres d'agent sous pression (18, 19, 20, 21), qui soumettent à une action les deux pistons (16, 17) et ainsi la tige de piston (13) dans la même direction.

2. Appareil agricole selon la revendication précédente, dans lequel l'unité de cylindre à agent sous pression (11) est logée sensiblement totalement, y compris un cylindre (12) et une tige de piston (13), dans l'intérieur de la partie de châssis (6) réalisée en tant que profil creux.

3. Appareil agricole selon la revendication précédente, dans lequel l'unité de cylindre à agent sous pression (11) est réalisée de manière à exercer une action double et présente quatre chambres d'agent sous pression (18, 19, 20, 21), qui sont associées par paire aux deux pistons (16, 17) de telle manière que chacun des deux pistons (16, 17) peut être soumis à une action au choix dans la direction ou dans l'autre direction opposée et ainsi la tige de piston (13) peut être à la fois rentrée et sortie du fait de l'action sur les deux pistons (16, 17).

4. Appareil agricole selon l'une quelconque des revendications précédentes, dans lequel l'unité de cylindre à agent sous pression (11) présente trois pistons (16, 17) ou plus, qui sont fixés de manière espacée les uns des autres sur une tige de piston (13) commune, dans lequel trois chambres d'agent sous pression (18, 20) ou plus sont prévues, qui soumettent à une action les trois pistons (16, 17) ou plus et ainsi la tige de piston (13) commune dans la même direction.

5. Appareil agricole selon l'une quelconque des revendications précédentes, dans lequel toutes les chambres d'agent sous pression (18, 19, 20, 21), qui soumettent à une action les pistons (16, 17) et ainsi la tige de piston (13) dans la même direction, sont branchées de manière parallèle les unes par rapport aux autres et sont reliées à un raccord de pression P(T) commun et/ou à un raccord de décharge de pression T(P) commun.

6. Appareil agricole selon l'une quelconque des revendications précédentes, dans lequel l'unité de cylindre à agent sous pression (11) est fixée sur une des parties de châssis (6) de manière solidaire axialement et sans pouvoir pivoter et est reliée à l'autre partie de châssis (5) à rabattre par rapport à celle-ci par une partie de levier basculant (15), qui est articulée sur l'unité de cylindre à agent de pression (11) et/ou est articulée sur l'autre partie de châssis (5).

7. Appareil agricole selon la revendication précédente, dans lequel ladite partie de levier basculant (15) peut être rentrée dans la partie de châssis (6), dans laquelle l'unité de cylindre à agent sous pression (11) est disposée, dans lequel ladite partie de levier basculant (15) est logée sensiblement totalement dans la partie de châssis (6) en particulier dans une première position pliée de la partie de châssis (5) et la partie de levier basculant (15) est sortie sensiblement totalement hors de la partie de châssis (6) dans la position pliée opposée de la partie de châssis (5).

8. Appareil agricole selon l'une quelconque des deux revendications précédentes, dans lequel la tige de piston (13) est montée, dans la zone de la liaison, à la partie de levier basculant (15), par un chariot de guidage (23) de manière à pouvoir coulisser longitudinalement et avec un appui transversal sur la partie de châssis (6), sur laquelle l'unité de cylindre à agent sous pression (11) est fixée.

9. Appareil agricole selon l'une quelconque des revendications précédentes, dans lequel les deux parties de châssis (5, 6) pouvant pivoter l'une par rapport à l'autre peuvent pivoter l'une par rapport à l'autre sur une plage de pivotement de plus de 120°, en particulier d'environ 180°.

10. Appareil agricole selon la revendication précédente, dans lequel l'unité de cylindre à agent sous pression (11) est prévue pour être active sans point mort sur la totalité de la plage de pivotement et/ou pour fournir sur la totalité de la plage de pivotement un déplacement de réglage de la partie de châssis (5, 6) l'une par rapport à l'autre.
